# EUROPÄISCHE PATENTSCHRIFT

(11) **EP 1 070 619 B1**
(45) Veröffentlichungstag und Bekanntmachung des Hinweises auf die Patenterteilung: **14.06.2006**
(21) Anmeldenummer: 00111619.3
(22) Anmeldetag: 31.05.2000
(51) Int. Cl.: B60J 7/12, B62D 35/00

(54) **Cabriolet-Fahrzeug**
Convertible vehicle
Véhicule cabriolet

(30) Priorität: 17.07.1999 DE 29912525 U
(43) Veröffentlichungstag der Anmeldung: 24.01.2001
(73) Patentinhaber: Wilhelm Karmann GmbH, 49084 Osnabrück (DE)
(72) Erfinder: Plassmeyer, Uwe, 49124 Georgsmarienhütte (DE); Hilgert, Wolf-Dieter, 49152 Bad Essen (DE)
(74) Vertreter: Busse & Busse Patentanwälte

(56) Entgegenhaltungen:
- EP-A- 0 554 694
- DE-A- 3 902 707
- PATENT ABSTRACTS OF JAPAN vol. 013, no. 497 (M-889), 9. November 1989 (1989-11-09) -& JP 01 197117 A (MAZDA MOTOR CORP), 8. August 1989 (1989-08-08)

## Beschreibung

Die Erfindung bezieht sich auf ein Cabriolet-Fahrzeug mit einem bereichsweise flexiblen Verdeck in einer Ausbildung gemäß dem Oberbegriff des Patentanspruches 1.

Ein derartiges Cabriolet-Fahrzeug kann beispielsweise in einem vorderen Verdeckbereich einen starren Rahmen oder ein starres, evtl. von Verdeckstoff überzogenes Plattenteil aufweisen oder außerhalb einer Verdeckgestängekonstruktion vollständig flexibel ausgebildet sein.

Insbesondere bei Cabriolet-Fahrzeugen, die nicht mit einem Stufenheck ausgestattet sind und bei denen der rückwärtige Verdeckbereich in den Heckbereich der Karosserie schräg abfallend übergeht, aber auch bei anders gearteten Fahrzeugen, stellt sich das Problem, durch geeignete windleitende Maßnahmen an dem Fahrzeug dessen Aerodynamik zu verbessern, etwa den Abtrieb an der Hinterachse zu vergrößern oder die Verwirbelung im Heckbereich zu verringern.

Die DE 295 09 682 zeigt hierfür eine der Karosserie unterhalb des Verdecks zugeordnete Abrißkante, die gleichzeitig als Aufnahmeraum für das Verdeck eingesetzt werden kann. Eine derartige Abrißkante ist aufgrund ihrer tiefen Anordnung aerodynamisch nicht optimal, zudem ist die optische Beeinträchtigung des Fahrzeugs erheblich. Der Konstruktionsaufwand ist durch die Veränderung, die an der Karosserie vorgenommen werden muß, beträchtlich.

Aus der gattungsbildenden EP-A-0 554 694 ist ein Fahrzeugdach mit zu öffnenden Dachteilen bekannt, bei dem seitliche und das hintere Dachteil zur Freigabe einer cabrioartigen Dachöffnung in einen Stauraum im hinteren Teil des Fahrzeuges verfahrbar sind. Dabei sind die verfahrbaren Dachteile derart ausgebildet, daß diese zumindest zum überwiegenden Teil feste Dachteile sind, um im geschlossenen Zustand ein Fahrzeug vorliegen zu haben, das einer herkömmlichen geschlossenen Limousine gleicht, wobei jedoch das Dach während der Fahrt in mehreren Zwischenstationen bis hin zur vollständigen Öffnung verfahrbar ist, um in diesem geöffneten Zustand eine cabrioartige Dachöffnung freigegeben zu haben. An einem einer Frontscheibe zugeordneten Rahmen ist dem Dach ein aufstellbarer Windabweiser vorgeordnet, der im geschlossenen Zustand in eine im Dach vorgesehene Öffnung hineingeschwenkt werden kann. Damit sind jedoch nur Windabweisungsflächen im vorderen Dachbereich des Fahrzeuges vorzusehen, nicht jedoch in Bereichen des Daches, die in einen heckseitigen Fahrzeugstauraum abzulegen sind. Damit sind Windabweisungsaufgaben im hinteren Dachbereich des Fahrzeuges nicht zu erfüllen.

Es ist Aufgabe der vorliegenden Erfindung, ein Cabriolet-Fahrzeug der eingangs genannten Art zu schaffen, bei dem die aerodynamischen Eigenschaften auch im hinteren Bereich des Fahrzeuges zu verbessern sind.

Zur Lösung dieser Aufgabe zeichnet sich das Cabriolet-Fahrzeug der eingangs genannten Art durch die Merkmale des Patentanspruches 1 aus. Hinsichtlich weiterer vorteilhafter Ausgestaltungen wird auf die Patentansprüche 2 bis 11 verwiesen.

Mit der Integration eines Spoilers im flexiblen Verdeck und dessen Umgrenzung durch flexible Verdeckbereiche ist eine Anordnung des Spoilers in einem Fahrzeugbereich ermöglicht, das aerodynamisch in einem günstigen Sinne zu beeinflussen ist.

Durch den beweglichen Spoiler kann seine Funktion den jeweiligen Gegebenheiten, insbesondere in Abhängigkeit von der gefahrenen Geschwindigkeit, angepaßt werden. Vorteilhafterweise liegt hierbei der Spoiler in Ruhestellung derart, daß er bündig mit der Außenhaut des flexiblen Verdeckes abschließt und somit auch optisch nicht störend hervortritt. Die Fläche des Spoilers kann dabei ebenfalls mit dem Verdeckstoff überzogen sein. Alternativ kommt beispielsweise auch eine Kontrastfarbe oder eine Kontrastlackierung in Betracht, um ein besonderes Designmerkmal geschaffen zu haben.

Bei einer modularen Ausbildung des Spoilers und der ihn bewegenden Antriebs- und Halterungselemente kann eine komplette Baueinheit in einem Montageschritt in das Verdeck eingepaßt werden. Dieses ist hierfür ober- und unterseitig von der Baueinheit eingefaßt, wobei insbesondere ein Vernieten, evtl. zusätzlich ein Verkleben o. dgl., als verbindende Maßnahme zwischen den starren Teilen der den Spoiler tragende Baueinheit und dem flexiblen Verdeck in Betracht kommt.

Wenn das den Spoiler tragende Modul mit einem Spriegel verbunden ist, der den Verdeckstoff spannend untergreift, ist einerseits das Modul an dem im geschlossenen Zustand starren Spriegel im wesentlichen unbeweglich festgelegt und von Bewegungen des Verdecks unabhängig, zudem ist über die Anbindung des Verdecks an das Modul gleichzeitig eine stabilisierende Wirkung auf das Verdeck ausgeübt, so daß auch bei höheren Geschwindigkeiten dessen Aufwölben unterbunden ist. Gleichzeitig kann das den Spoiler tragende Modul einen Teil eines Überrollschutzes ausbilden. Elektrische Zuleitungen zum Spoiler können im Spriegel verlegt sein. Bei Integration des den Spoiler tragenden Moduls in den Spriegel bildet dieses gleichzeitig ein tragendes Element aus, so daß es als Teil des Spriegels eine Doppelfunktion wahrnimmt.

Weitere Vorteile und Merkmale ergeben sich aus einem in der Zeichnung dargestellten Ausführungsbeispiel des Gegenstandes der Erfindung. In der Zeichnung zeigt:

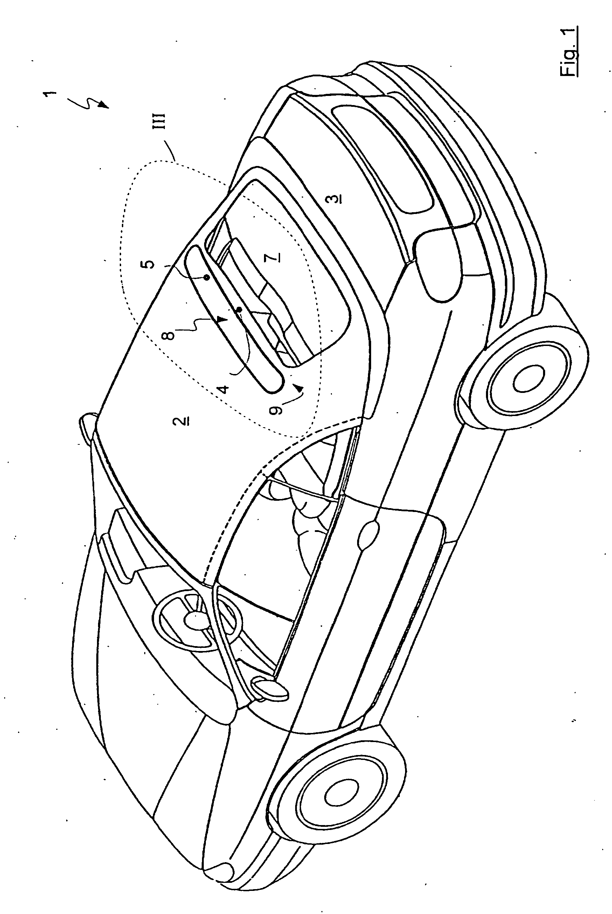

- Fig. 1: eine perspektivische Gesamtansicht eines erfindungsgemäßen Cabriolet-Fahrzeugs von schräg hinten mit in Ruhestellung befindlichem Spoiler,

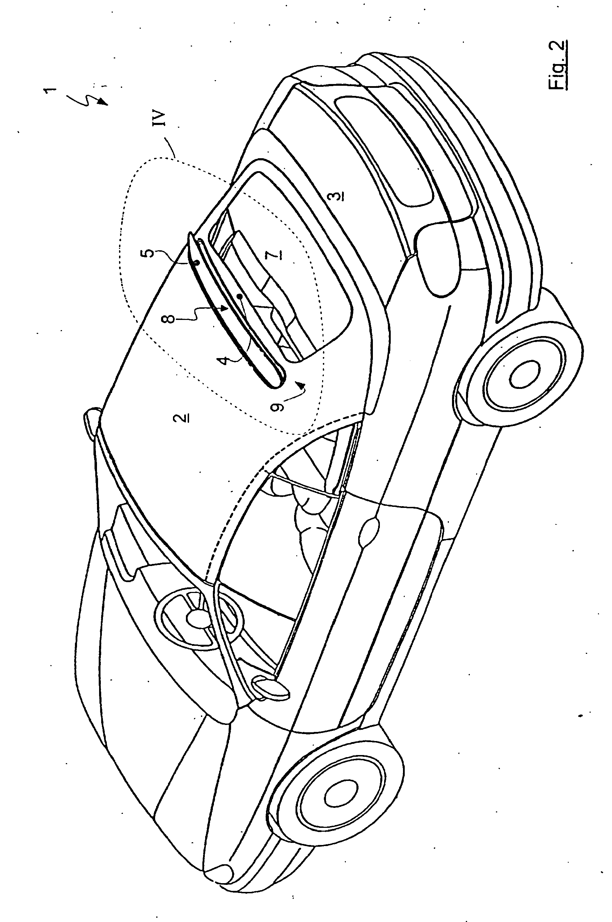

- Fig. 2: eine ähnliche Ansicht wie Fig. 1 bei in Wirkstellung befindlichem Spoiler,

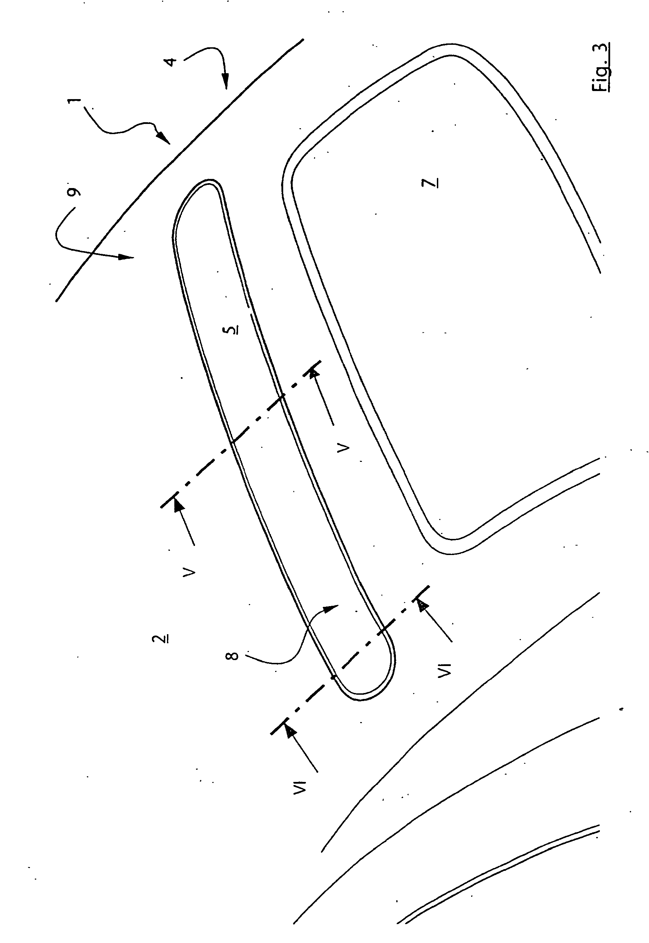

- Fig. 3: das Detail 3 aus Fig. 1,

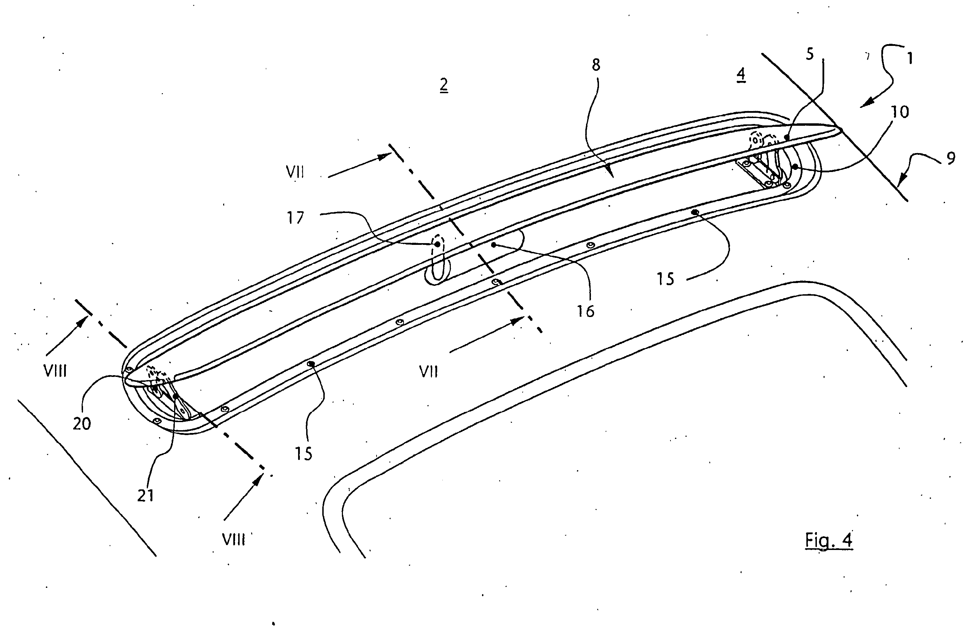

- Fig. 4: das Detail 4 aus Fig. 2,
- Fig. 5: einen Schnitt entlang der Linie V-V in Fig. 3,
- Fig. 6: einen Schnitt entlang der Linie VI-VI in Fig. 3,
- Fig. 7: einen Schnitt entlang der Linie VII-VII in Fig. 4,
- Fig. 8: einen Schnitt entlang der Linie VIII-VIII in Fig. 4,

Das erfindungsgemäße Cabriolet-Fahrzeug 1 weist in Ausgestaltung nach dem gezeichneten Ausführungsbeispiel ein faltbares Verdeck 2 auf, das in einen Fließheckbereich 3 einmündet. Das Verdeck 2 ist zumindest im Bereich 4 flexibel ausgebildet und weist hier ein einen Spoiler 5 tragendes Modul 11 auf.

Das Verdeck 2 ist insgesamt mit dem Modul 11 und dem Spoiler 5 im Heckbereich 3 des Fahrzeugs 1 ablegbar.

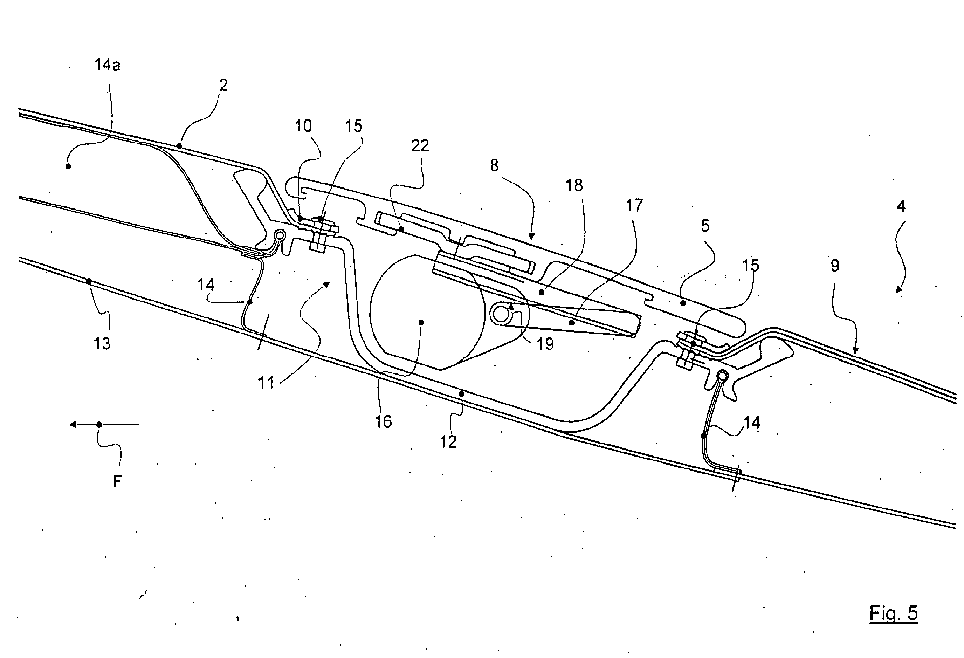

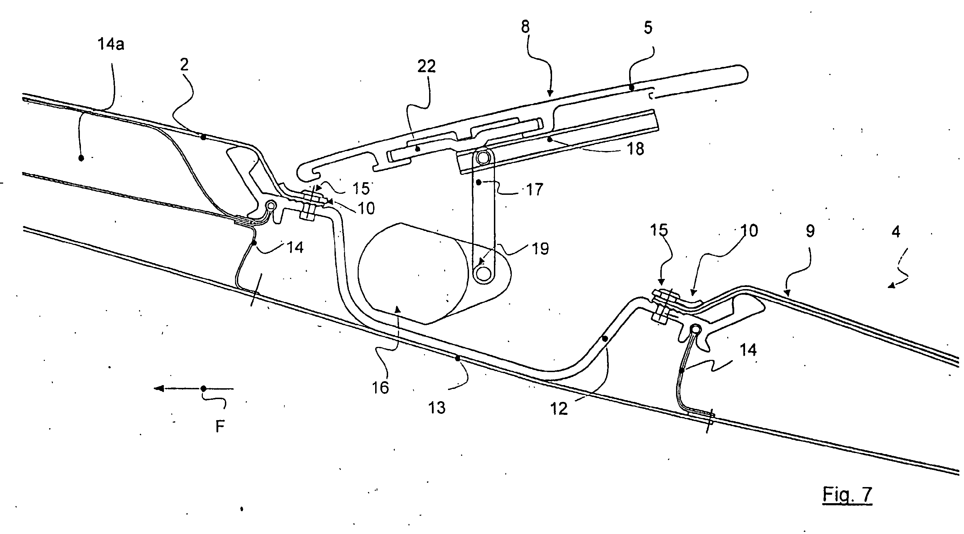

Der Spoiler 5 ist oberhalb einer Heckscheibe 7 angeordnet und schließt bei beweglicher Ausbildung mit seiner Außenfläche 8 in Ruhestellung bündig mit der Außenfläche 9 des Verdecks 2 ab (Fig. 5). In Wirkstellung (Fig. 7) ist der Spoiler 5 gegenüber dem Verdeck 2 ausgestellt, so daß er eine Abrißkante bildet und den Abtrieb des Fahrzeughecks 3 vergrößert.

Die Einstellung der Wirkstellung kann sowohl geschwindigkeitsabhängig als auch durch manuelle Betätigung eines entsprechenden Mechanismus durch den Fahrer erfolgen. Es kann zudem eine Sicherung vorgesehen sein, daß eine Öffnung des Verdecks 2 nur bei in Ruhestellung befindlichem Spoiler 5 möglich ist.

Der Spoiler 5 ist insgesamt in einem Modul 11 aufgenommen, das einen oberseitigen, umlaufenden Rahmen 10 und einen unterseitigen, wannenförmigen Aufnahmebereich 12 für Antriebs- und Halterungselemente des Spoilers 5 umfaßt. Das gesamte Modul 11 ist vom Fahrzeuginnenhimmel 13 untergriffen, im Zwischenraum zwischen der äußeren Verdecklage und diesem befindet sich je nach Ausführung ein ein- oder mehrlagiges Verdeckpolster 14a. Die Anbindung des Himmels 13 ist über Anbindungslaschen 14 mit Klebe-, Schweißverbindung o. dgl. sichergestellt. Zur Verbindung des Moduls 11 mit dem Verdeck 2 ist der unterhalb des Spoilers 5 liegende und in seiner Gestalt im wesentlichen dem Umrißverlauf des Spoilers 5 folgende Rahmen 10 mit dem Verdeckstoff über Nieten 15 verbunden. Der Verdeckstoff ist hierbei zwischen diesem Rahmen und dem oberen Rand der Aufnahmeeinheit 12 gehalten, die Nieten durchgreifen sowohl den Rahmen 10 als auch den Verdeckstoff 2 sowie den Rand des Aufnahmebereiches 12. Der Verdeckstoff ist daher zwischen dem gleichzeitig eine Abdeckleiste bildenden Rahmen 10 und dem Randbereich der wannenförmigen Aufnahmeeinheit 12 eingefaßt.

Um die Ausstellbarkeit des Spoilers 5 zu ermöglichen, ist in der Aufnahmeeinheit 12 zumindest ein motorischer Antrieb 16, hier ein Elektromotor, angeordnet. Dieser befindet sich im Ausführungsbeispiel im mittleren Bereich und ist mit einem Antriebshebel 17 versehen, der durch den Motor 16 in Schwenkbewegung versetzt werden kann. An seinem dem Motor 16 abgewandten Endbereich ist der Antriebshebel 17 in einer linearen Führung 18, die sich parallel zum Querverlauf des Spoilers 5 erstreckt, gehalten. Durch Verschwenkung entlang dem Pfeil 19 (Übergang von Fig. 5 zu Fig. 7) wird das abseits des Antriebs 16 gelegene Ende des Antriebshebels 17 in der Linearführung 18 in Fahrtrichtung F vorwärts verlagert, wodurch die Aufstellbewegung des Spoilers 5, der zusätzlich über weitere Hebel 20,21 mit der Aufnahmeeinheit 12 verbunden ist, bewirkt wird. Anstelle eines Elektromotors ist als Antrieb 16 auch ein Hydraulikzylinder möglich. Statt der unten erläuterten seitlichen Hebel 20,21 kann für eine reine Schwenkbewegung auch ein Scharnier an der vorderen Kante des Spoilers 5 vorgesehen sein.

Die Hebel 20,21 befinden sich im seitlichen Außenbereich des Spoilers 5 und sind beidseits symmetrisch zu einer vertikalen Längsmittelebene des Fahrzeugs 1 angeordnet. Die Hebel 20,21 sind mit dem Spoilerträger 22 verbunden, gegenüber dem der Spoiler 5 beispielsweise aufschiebbar und auch leicht auswechselbar sein kann.

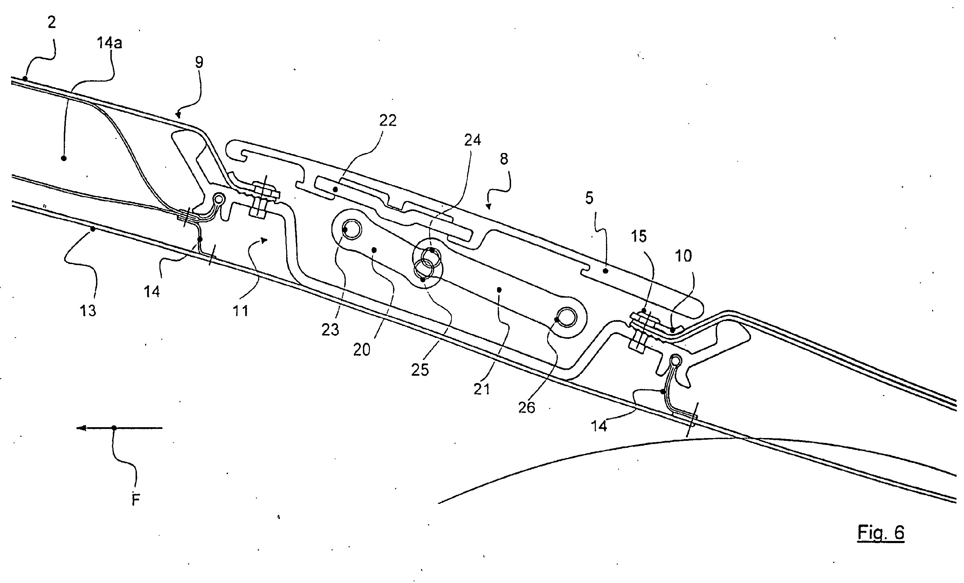

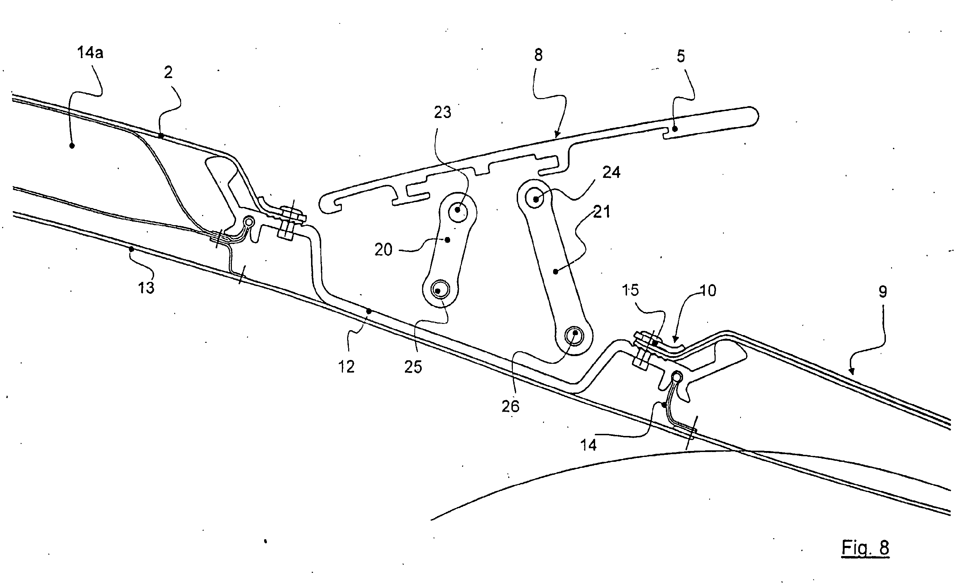

Zur Anbindung der Hebel 20,21 sind an ihrem oberen Endbereich zwei Drehgelenke 23,24 vorgesehen, in ihrem der Aufnahmeeinheit 12 zugewandten Endbereich sind sie mit zwei weiteren Drehgelenken 25,26 versehen, mit denen sie mit dieser Aufnahmeeinheit 12 in Verbindung stehen. Insgesamt ist damit ein Viergelenk gebildet. In Ruhestellung des Spoilers (Fig. 6) sind die Hebel 20,21 nahezu parallel zum Verdeckverlauf in der Aufnahmeeinheit 12 gelagert. Durch Betätigung des Antriebshebels 17 und dessen entsprechende Verlagerung in der Linearführung 18 findet eine Aufrechtstellung der Hebel 20,21 (Fig. 8) statt. Dadurch, daß der in Fahrtrichtung F vordere Hebel 20 kürzer ausgeführt ist, wird die schräge Aufstellung des Spoilers 5 erreicht. Diese ist durch den Hebelmechanismus nicht eine reine Schwenkbewegung, sondern gleichzeitig findet eine leichte Verlagerung gegen die Fahrtrichtung F statt, das Aufstellen bzw. Einfahren des Spoilers ist daher eine kombinierte Rotations- und Translationsbewegung.

Der Spoiler 5 kann aus geeignetem Kunststoff oder auch aus Aluminium- oder Stahlblech gefertigt sein und verschiedenste Außenflächengestaltungen aufweisen. Die Aufnahmeeinheit 12 stellt insgesamt wie auch der Rahmen 10 ein stabiles, starres und in Verbindung mit diesem das Verdeck 2 im Verbindungsbereich spannendes Bauteil dar und ist aus einem entsprechend stabilen Material zu fertigen. Das den Spoiler tragende Modul 11 kann in einen Spriegel integriert sein und somit ein tragendes Teil für das Verdeck 2 ausbilden. Dann ist das durch das Modul zusätzlich in das Fahrzeug einzubringende Gewicht insofern verringert, als ein Teil des Spriegels dafür ausgenommen sein kann.

## Patentansprüche

1. Cabriolet-Fahrzeug (1) mit einem zumindest bereichsweise flexiblen Verdeck (2), das in einem rückwärtigen Fahrzeugbereich ablegbar ist, insbesondere Cabriolet-Fahrzeug mit einem schräg abfallenden Heckbereich (3), wobei bei dem Verdeck (2) ein aus einem starren Material bestehender Spoiler (5) zugeordnet ist, **dadurch gekennzeichnet, daß** der Spoiler (5) in das flexible Verdeck (2) integriert und von flexiblen Verdeckbereichen umgrenzt ist und daß der Spoiler (5) im geschlossenen Zustand des Verdeckes gegenüber diesem beweglich ist.

2. Cabriolet-Fahrzeug nach Anspruch 1, **dadurch gekennzeichnet, daß** die Bewegung geschwindigkeitsabhängig erfolgt.

3. Cabriolet-Fahrzeug nach einem der Ansprüche 1 oder 2, **dadurch gekennzeichnet, daß** der Spoiler (5) in ein Modul (11) eingefaßt ist, das insgesamt mit dem Verdeck (2) verbindbar ist.

4. Cabriolet-Fahrzeug nach Anspruch 3, **dadurch gekennzeichnet, daß** das Modul (11) mit einem das Verdeck (2) spannend untergreifenden Spriegel verbunden ist.

5. Cabriolet-Fahrzeug nach Anspruch 4, **dadurch gekennzeichnet, daß** das Modul (11) einen umlaufenden Rahmen (10) umfaßt, der mit dem anschließenden Verdeckbereich (4) dauerhaft verbunden ist.

6. Cabriolet-Fahrzeug nach Anspruch 5, **dadurch gekennzeichnet, daß** das Modul (11) unterhalb des Spoilers (5) eine wannenförmige Aufnahmeeinheit (12) bietet und in diesem zumindest ein Motor (16) für die Verstellbarkeit des Spoilers (5) gehalten ist.

7. Cabriolet-Fahrzeug nach Anspruch 6, **dadurch gekennzeichnet, daß** das Modul (11) insgesamt von einem Innenhimmel (13) des Fahrzeugs untergriffen ist.

8. Cabriolet-Fahrzeug nach einem der Ansprüche 5 bis 7, **dadurch gekennzeichnet, daß** der Verdeckstoff (2) zwischen dem Rahmen (10) und der Aufnahmeeinheit (12) gehalten ist.

9. Cabriolet-Fahrzeug nach einem der Ansprüche 1 bis 8, **dadurch gekennzeichnet, daß** dem motorischen Antrieb (16) für die Beweglichkeit des Spoilers (5) zumindest ein Antriebshebel (17) zugeordnet ist, der einenends mit dem motorischen Antrieb (16) verbunden und von diesem schwenkbar beweglich ist und anderenends in einer linearen Führung (18), die parallel zum Spoiler (5) angeordnet ist, geführt ist.

10. Cabriolet-Fahrzeug nach Anspruch 9, **dadurch gekennzeichnet, daß** der Spoiler (5) über zumindest eine weitere Gelenkanordnung an dem Rahmen gehalten ist, wobei die Gelenkanordnung zwei Hebel (20;21) umfaßt, die jeweils mit zwei Gelenken (23;24) am Spoiler (5) und mit zwei weiteren Gelenken (25;26) an der Aufnahmeeinheit (12) schwenkbar gehalten sind.

11. Cabriolet-Fahrzeug nach einem der Ansprüche 1 bis 10, **dadurch gekennzeichnet, daß** der Spoiler (5) oberhalb der Heckscheibe (7) angeordnet ist.

## Claims

1. Convertible vehicle (1) having a folding top (2) which is flexible at least in a region or regions and which can be stowed in a rear part of the vehicle, in particular a convertible vehicle having a tail region (3) which slopes down at an angle, the folding top (2) having associated with it a spoiler (5) composed of a rigid material, **characterised in that** the spoiler (5) is incorporated into the flexible folding top (2) and is outlined by flexible regions of the folding top, and **in that** the spoiler (5) is movable relative to the folding top when the latter is in the raised state.

2. Convertible vehicle according to claim 1, **characterised in that** the movement takes place as a function of speed.

3. Convertible vehicle according to either of claims 1 and 2, **characterised in that** the spoiler (5) is mounted in a module (11) which can be connected as a whole to the folding top (2).

4. Convertible vehicle according to claim 3, **characterised in that** the module (11) is connected to a bow which fits under and tensions the folding top (2).

5. Convertible vehicle according to claim 4, **characterised in that** the module (11) comprises a frame (10) extending round in a loop which is permanently connected to the contiguous region (4) of the folding top.

6. Convertible vehicle according to claim 5, **characterised in that** the module (11) provides a trough-like receiving unit (12) below the spoiler (5) and at least one motor (16) is held therein to provide adjustability for the spoiler (5).

7. Convertible vehicle according to claim 6, **characterised in that** a roof lining (13) of the vehicle fits under the module (11) as a whole.

8. Convertible vehicle according to one of claims 5 to 7, **characterised in that** the material (2) of the folding top is held between the frame (10) and the receiving unit (12).

9. Convertible vehicle according to one of claims 1 to 8, **characterised in that** the motorised drive (16) to provide mobility for the spoiler (5) has associated with it at least one driving lever (17) which at one end is connected to the motorised drive (16) and is able to be pivotably moved thereby and at the other end is guided in a linear guide (18) which is arranged parallel to the spoiler (5).

10. Convertible vehicle according to claim 9, **characterised in that** the spoiler (5) is held to the frame via at least one further jointing arrangement, the jointing arrangement comprising two levers (20, 21) which are held to be pivotable at the spoiler by respective ones of two joints (23, 24) and at the receiving unit (12) by respective ones of two further joints (25, 26).

11. Convertible vehicle according to one of claims 1 to 10, **characterised in that** the spoiler (5) is arranged above the rear window (7).

## Revendications

1. Cabriolet (1) avec une capote (2) au moins partiellement flexible, qui peut être rangée dans une zone de véhicule arrière, en particulier cabriolet avec une zone arrière (3) inclinée, et avec un becquet (5) fabriqué en un matériau rigide, associé à la capote (2),
**caractérisé en ce que**
le becquet (5) est intégré à la capote flexible (2) et entouré par des zones de capote flexibles, et le becquet (5) est mobile par rapport à la capote lorsque celle-ci est fermée.

2. Cabriolet selon la revendication 1,
**caractérisé en ce que**
le mouvement du becquet s'effectue en fonction de la vitesse.

3. Cabriolet selon l'une quelconque des revendications 1 ou 2,
**caractérisé en ce que**
le becquet (5) est intégré à un module (11) qui peut être relié intégralement à la capote (2).

4. Cabriolet selon la revendication 3,
**caractérisé en ce que**
le module (11) est relié à un arceau tendant la capote (2) par le dessous.

5. Cabriolet selon la revendication 4,
**caractérisé en ce que**
le module (11) comprend un cadre (10) périphérique solidaire de la zone de capote (4) adjacente.

6. Cabriolet selon la revendication 5,
**caractérisé en ce qu'**
en dessous du becquet (5), le module (11) présente une unité de logement (12) en forme de cuvette dans laquelle est maintenu au moins un moteur (16) pour le réglage du becquet (5).

7. Cabriolet selon la revendication 6,
**caractérisé en ce que**
le module (11) est globalement recouvert par le dessous par un habillage de plafond intérieur (13) du véhicule.

8. Cabriolet selon l'une quelconque des revendications 5 à 7,
**caractérisé en ce que**
le matériau de capote (2) est maintenu entre le cadre (10) et l'unité de logement (12).

9. Cabriolet selon l'une quelconque des revendications 1 à 8,
**caractérisé en ce que**
pour la mobilité du becquet (5) on associe à l'entraînement motorisé (16) au moins un levier d'entraînement (17) qui, d'un côté, est relié à l'entraînement motorisé (16) et peut être actionné en pivotement par celui-ci et, de l'autre côté, est guidé dans un guidage linéaire (18) disposé parallèlement au becquet (5).

10. Cabriolet selon la revendication 9,
**caractérisé en ce que**
le becquet (5) est maintenu sur le cadre par au moins un autre système d'articulation, celui-ci comprenant deux leviers (20 ; 21) qui sont respectivement maintenus en pivotement sur le becquet (5) avec deux articulations (23 ; 24) et sur l'unité de logement (12) avec deux autres articulations (25 ; 26).

11. Cabriolet selon l'une quelconque des revendications 1 à 10,
**caractérisé en ce que**
le becquet (5) est disposé au-dessus de la lunette arrière (7).
